# EUROPÄISCHE PATENTSCHRIFT

(11) **EP 1 356 729 B1**
(45) Veröffentlichungstag und Bekanntmachung des Hinweises auf die Patenterteilung: **09.11.2005**
(21) Anmeldenummer: 03005674.1
(22) Anmeldetag: 13.03.2003
(51) Int. Cl.: A01M 7/00, A01D 41/14

(54) **Messeinrichtung an einer landwirtschaftlichen Maschine**
Mesuring device for agricultural machine
Dispositif de mesure pour machine agricole

(30) Priorität: 02.04.2002 DE 10214648
(43) Veröffentlichungstag der Anmeldung: 29.10.2003
(73) Patentinhaber: CLAAS Selbstfahrende Erntemaschinen GmbH, 33428 Harsewinkel (DE)
(72) Erfinder: Diekhans, Norbert, Dr., 33335 Gütersloh (DE); Homburg, Helmut, 33428 Harsewinkel (DE); Huster, Jochen, 33330 Gütersloh (DE); Pollklas, Manfred, 33378 Rheda-Wiedenbrück (DE)

(56) Entgegenhaltungen:
- EP-A- 0 157 592
- GB-A- 2 184 633
- GB-A- 2 285 731
- US-A- 5 348 226
- US-A1- 2002 024 665

## Beschreibung

Die vorliegende Erfindung betrifft Verfahren und Messeinrichtungen zur Ermittlung des Abstandes zwischen einer landwirtschaftlichen Maschine und dem Boden, wobei die landwirtschaftliche Maschine aus einer selbstfahrenden Arbeitsmaschine und einem Vorsatzgerät besteht und zumindest ein Sensor den Abstand zwischen dem Vorsatzgerät und der Oberfläche des Feldes berührungslos ermittelt,

Es ist bekannt, an einem Vorsatzgerät einer landwirtschaftlichen Maschine wenigstens einen mechanischen Bodentaster anzubringen. Dieser ermittelt den Abstand des Vorsatzgerätes zur Oberfläche des Feldes. Eine nachgeschaltete Steuereinrichtung steuert die Höhe des Vorsatzgerätes über der Oberfläche des Feldes in Abhängigkeit des sensierten Abstandes. Ferner ist es beispielsweise aus der DE 38 07 610 C2 bekannt mehrere Bodentaster über die Arbeitsbreite verteilt an dem Vorsatzgerät anzuordnen. Die sensierten Abstände werden von einer Steuereinrichtung zur automatischen Höhenregelung des Vorsatzgerätes über dem Feld beziehungsweise zur automatischen Regelung der Querneigung des Vorsatzgerätes, verwendet. Die Bodentaster sind federbelastet und wirken mechanisch auf den Erntegutbestand beziehungsweise auf den Boden ein. Bei der in der DE 38 07 610 C2 gezeigten Anordnung, bewirkt dieses zwar ein Eindringen in das Stoppelfeld beziehungsweise eine Verdichtung des Unkrautes und führt zu einer verbesserten Messung des Abstandes, hat jedoch zur Folge, dass eine derartige Anordnung an einem Getreideschneidwerk zur Vermeidung von Ernteverlusten nur in Fahrtrichtung hinter dem Messerbalken möglich ist. Der tatsächliche Abstand des Vorsatzgerätes zum Boden kann mit mechanischen Bodentastern nur in dünnem Erntegutbestand oder in einem unkrautfreien Bereich und zwischen den einzelnen Reihen abgetastet werden. Ein weiterer Nachteil ergibt sich durch den mechanisch begrenzten Messbereich der Bodentaster. So können diese Bodentaster beispielsweise beim Ernten von Raps nicht eingesetzt werden, da sie bei der hierbei erforderlichen Arbeitshöhe des Vorsatzgerätes keinen Kontakt zum Boden haben. Ferner unterliegen Bodentaster mechanischem Verscheiß und Beschädigungen und müssen daher hierfür konstruktiv aufwendig sowie für die Kurven- und Rückwärtsfahrt ausgelegt sein.

Es ist weiterhin beispielsweise aus der DE 44 06 892 A1 bekannt, den Abstand eines Vorsatzgerätes zur Oberfläche des Feldes durch am Vorsatzgerät angeordnete Bodenabstandssensoren berührungsfrei abzutasten. Der hierzu verwendete Ultraschallsensor tastet anhand der Laufzeit eines gesendeten und empfangenen Wellenimpulses den Abstand zur Oberfläche des Feldes ab. Die Verwendung eines Ultraschallsensors für diese Anwendung hat den Nachteil, dass bei einem dichten Bodenbewuchs beziehungsweise starkem Unkrautbesatz nicht der Abstand zum Boden, sondern nur zur Oberfläche des Bodenbewuchs beziehungsweise des Unkrauts abgetastet werden kann. Die gesendete Ultraschallwelle wird direkt am nahesten Hindernis reflektiert und dieser Abstand dann als Abstand zum Boden sensiert. Eine zu hohe Einstellung des Vorsatzgerätes ist die unwillkürliche Folge, wodurch beispielsweise auf dem Boden liegendes Erntegut nicht mehr vollständig von dem Vorsatzgerät aufgenommen oder das Erntegut durch eine zu hohe Schnitthöhe mit Verlust vom Feldstück abgeerntet wird.

Aus der EP 0157 592 ist eine Auslegeranordnung bekannt, die beispielsweise an einem Traktor angeordnet ist und eine Sprühvorrichtung aufnimmt. An dem Ausleger 10 der Auslegeranordnung sind mehrere Sensoren 51-54 angeordnet, die den Abstand des Auslegers 10 in der Weise ermitteln, dass die sich aus Feldboden und Pflanzenbewuchs ergebende Oberfläche detektiert wird. Die eingesetzten Sensoren haben damit den Nachteil, dass sie im dichten Feldbewuchs den Abstand zur Pflanze und nicht den Abstand zum Boden ermitteln.

Es ist Aufgabe der Erfindung eine Einrichtung zu schaffen, die eine berührungslose Ermittlung des Abstandes der landwirtschaftlichen Maschine zum Boden ermöglicht.

Erfindungsgemäß wird die Aufgabe dadurch gelöst, dass der landwirtschaftlichen Maschine wenigstens ein Sensor zugeordnet ist, der mittels zumindest einer den Feldbewuchs durchdringenden elektromagnetischen Welle wenigstens den Abstand zum Boden berührungslos ermittelt. Die Verwendung einer derartigen elektromagnetischen Welle ermöglicht eine sichere Erkennung des Abstandes zum Erdboden, da sie den Feldbewuchs durchdringt und am Erdboden reflektiert wird. Vorteilhaft durchdringt die elektromagnetische Welle den Bewuchs des Feldes, wie Getreide, Stoppeln, Unkraut oder eine Untersaat.

In einer ersten Ausgestaltung der Erfindung wird als der wenigstens eine Sensor ein Radarsensor verwendet. Die von dem Radarsensor ausgesendeten elektromagnetischen Wellen durchdringen den Feldbestand auch über größere Entfernungen und werden von der Oberfläche des Bodens sicher reflektiert. Aus dem Anbringungsort des Sensors an der landwirtschaftlichen Maschine und dessen Ausrichtung zum Boden, lässt sich der Abstand des Bodens zur landwirtschaftlichen Maschine in Verbindung mit dem Empfangssignal der elektromagnetischen Welle leicht berechnen.
In einer ersten Weiterbildung des erfindungsgemäßen Radarsensors arbeitete der wenigstens eine Radarsensor mit einer Frequenz von 24 GHz. Diese Frequenz eignet sich vorteilhaft zur Durchdringung von in der Landwirtschaft vorkommenden Feldbewüchsen und ist gleichzeitig eine international frei verwendbare Frequenz.
In einer weiteren Ausgestaltung der Erfindung wird das Sendesignal des wenigstens einen Radarsensor sinusförmig frequenzmoduliert. Dieses Verfahren ermöglicht eine einfache Auswertung des Empfangssignals in Verbindung mit dem Sendesignal anhand einer Amplituden- und Phasenlagenauswertung. Hierdurch wird eine einfache kostengünstige Hardware sowie Softwareausstattung des Radarsensors möglich.
In einer Ausgestaltung der Erfindung wird das Sendesignal des wenigstens einen Radarsensor linear frequenzmoduliert. Dies ermöglicht vorteilhaft eine Ermittlung von mehreren Abstandswerten aus einem Empfangssignal mittels lediglich eines Radarsensors.

Erfindungsgemäß wird die Aufgabe auch dadurch gelöst, dass der landwirtschaftlichen Maschine wenigstens ein Sensor zugeordnet ist, der mittels zumindest einer wenigstens annähernd senkrecht zum Boden hin ausgerichteten fokussierten elektromagnetischen Welle an dem Feldbewuchs vorbei den Abstand zum Boden berührungslos ermittelt. Die annähernd senkrechte Ausrichtung ermöglicht eine Abtastung entlang des Feldbewuchses zum Boden bei möglichst geringer Störung durch den senkrecht gewachsenen Feldbewuchs, wie zum Beispiel durch Grashalme oder Stoppeln. Durch die Fokussierung der elektromagnetischen Welle wird die Abtastfläche des Abtaststrahls punktförmig ausgebildet und benötigt nur ein minimales Sichtfenster zum Boden um diesen sicher abtasten zu können. Insbesondere dringt dieser Abtaststrahl möglichst tief an dem Feldbewuchs vorbei zum Boden vor.
Erfindungsgemäß eignet sich als der wenigstens eine Sensor ein Lasersensor. Dieser tastet mit einem punktförmigen Laserstrahl mittels einer Laufzeitmessung den Abstand zum Boden hin ab und ermittelt vorteilhaft auch, durch die annähernd senkrechte Anordnung und der stark fokussierten Ausführung des Laserstrahls an dem Feldbewuchs vorbei, den Abstand zum Boden. Durch die Bewegung der landwirtschaftlichen Maschine wird der Feldbewuchs vorteilhaft abgescannt und ständig neue Sichtfenster zum Boden überfahren, so dass der Boden laufend erfassbar ist.

Die Verwendung der erfindungsgemäß vorgeschlagenen Lösungen ermöglichen einerseits die Lage des Abtastpunktes am Bodens bezüglich der landwirtschaftlichen Maschine frei wählen und andererseits die Anbringung des Sensors an der landwirtschaftlichen Maschine frei an die Ausstattung und deren Ausbildung anpassen zu können. Die möglichen Abtastentfernungen und die hierbei erzielbaren Messgenauigkeiten der verwendeten Sensoren liegen vorteilhaft in den geforderten Bereichen und übertreffen die bekannten mechanischen Bodentaster. Hierdurch wird beispielsweise eine Bodenkopierung des Vorsatzgerätes auch beim Ernten mit größeren Schnitthöhen möglich. Durch die erfindungsgemäß kontaktfreie Abtastung des Bodens ist für die Kurvenfahrt beziehungsweise für die Rückwärtsfahrt der landwirtschaftlichen Maschine eine besondere konstruktive Auslegung der Sensoren nicht erforderlich.

In einer Weiterbildung der Erfindung ermittelt der wenigstens eine Sensor den Abstand zum Boden durch ein oszillierendes Abtastsignal an mehreren Stellen. Diese oszillierende Bewegung des Abtastsignals erbringt vorteilhaft eine Vielzahl von Abstandswerten innerhalb einer kurzen Zeit und erhöht die Wahrscheinlichkeit, den Abstand zum Boden durch ein Sichtfenster hindurch abgetastet zu haben. Aus dieser Vielzahl von Messwerten kann dann vorteilhaft der wahrscheinlichste Messwert ausgewählt werden, der dem Abstand zum Boden entspricht.

In einer weiteren Ausgestaltung der Erfindung wird quer zur Fahrtrichtung der landwirtschaftlichen Maschine an mehreren Stellen der Abstand zum Boden ermittelt. Vorteilhaft arbeitet ein Sensor hierfür mit mehreren Abtastsignalen, die dann den Boden bereichsweise abtasten und vorteilhaft Informationen über die Kontur und insbesondere die Neigung des Bodens bezüglich der landwirtschaftlichen Maschine liefern. Ferner lässt sich die Vielzahl von Abstandswerten zueinander bewerten und hierdurch Fehlmessungen in Spuren, Löchern oder auf Erdhügeln eliminieren. Die Ermittlung von mehreren Abstandswerten zum Boden kann durch wenigstens einen bewegten Abtaststrahl oder einen bewegten Sensor oder durch mehrere Sensoren erreicht werden.

In einer Weiterbildung der Erfindung werden zumindest zwei ermittelte Abstandswerte eines Sensors in einem Speicher aufgezeichnet und der größte Abstandswert als Abstandswert zum Boden definiert. Insbesondere werden hierdurch bei der Bewegung der landwirtschaftlichen Maschine über das Feld in Fahrtrichtung hintereinander liegende Abstandswerte aufgezeichnet und so ein Vergleich anhand der gespeicherten Werte möglich. Vorteilhaft können auch wenigstens zwei quer zur Fahrtrichtung von einem Sensor ermittelte Abstandswerte nach dem größten Abstandswert selektiert werden. Vorteilhaft kann auch eine Vielzahl von Abstandswerten mehrerer Sensoren in einem Speicher gespeichert und nach den größten Abstandswerten oder bestimmter Auswahlkriterien wie Maximal/Minimal Werte selektiert werden.

Durch die Verwendung von wenigstens einem berührungslos arbeitenden Sensor ist in einer weiteren Ausgestaltung der Erfindung vorteilhaft möglich, dass der wenigstens eine Sensor den Abstand zum Boden in Fahrtrichtung der landwirtschaftlichen Maschine vorausschauend ermittelt. Hierdurch ist eine frühzeitige Erkennung von Veränderungen im Bodenprofil vor dem Ernten beziehungsweise der Aufnahme von Erntegut vorteilhaft durch den Feldbewuchs hindurch oder an diesem vorbei möglich. Eine automatische Bodenkopierung des Vorsatzgerätes kann hierdurch vorausschauend geregelt werden. Der Verschleiß, der durch Bodenkontakt an aufnehmenden Elementen wie Fingern oder Zinken, sowie Messerbalken und Bodenteilen am Vorsatzgerät entsteht, kann vorteilhaft reduziert und größtenteils vermieden werden.

In einer Weiterbildung der Erfindung wird der wenigstens eine ermittelte Abstand zum Boden zur automatischen Steuerung des Abstandes des Vorsatzgerätes zum Boden verwendet. Hierdurch wird eine sichere Höhenführung des Vorsatzgerätes gewährleistet. Dabei hat ein starker Unterwuchs beispielsweise durch Unkraut in einem Getreidebestand keinen Einfluss auf die Höhenführung und eine gleichmäßige Stoppelhöhe wird vorteilhaft erzielt.

In einer weiteren Ausgestaltung der Erfindung werden wenigstens zwei ermittelte, quer zur Fahrtrichtung der landwirtschaftlichen Maschine voneinander beabstandete Abstände zum Boden zur Steuerung der Querneigung des Vorsatzgerätes verwendet.

Eine verbesserte, genauere und sichere Bodenkopierung des Vorsatzgerätes auch quer zur Fahrtrichtung, vorteilhaft unbeeinflusst von der Beschaffenheit des Feldbewuchses, wird hierdurch gewährleistet. Wird das Abtastsignal über die gesamte Arbeitsbreite des Vorsatzgerätes verschwenkt, kann ferner über die gesamte Arbeitsbreite eine vorausschauende Beurteilung des Verlaufs des Bodenprofils abgeleitet und weiterhin Größe und Verlauf von Bodenwellen, Furchen und/oder auch Hindernisse erkannt und entsprechend darauf reagiert beziehungsweise eine davon abhängige optimale Bodenkopierung vorgenommen werden.

In einer Weiterbildung der Erfindung ermittelt der wenigstens eine Sensor den Abstand zum Boden und wenigstens einen weiteren Abstand zum Feldbewuchs. Hierdurch können vorteilhaft mittels eines Sensors mehrere Höheninformationen über den sensierten Feldbereich abgeleitet werden. Beispielsweise kann die Höhe des Feldbewuchses oder eines auf dem Feld liegenden Schwads oder die Stoppelhöhe ermittelt werden.

Die Erfindung kann dahingehend ausgestaltet werden, dass wenigstens zwei quer zur Fahrtrichtung der landwirtschaftlichen Maschine ermittelte Abstandswerte zur Spurführung der landwirtschaftlichen Maschine verwendet werden. Insbesondere können vorteilhaft die von wenigstens einem Sensor quer zur Fahrtrichtung ermittelten Abstandswerte zur Ermittlung des Abstandes zum Boden und zur Lokalisierung der Lage einer Bearbeitungskante herangezogen werden. Hierzu eignet sich vorteilhaft ein Sensor, der mit einem quer zur Fahrtrichtung bewegten Abtastsignal und mit einer fokussierten elektromagnetischen Welle arbeitet.

In einer weiteren besonderen Ausgestaltung der Erfindung, ermittelt der wenigstens eine Sensor zumindest einen weiteren Parameter des Feldbewuchses. Vorteilhaft kann dieser Parameter zusätzlich von einem erfindungsgemäßen Sensor zur Abstandsmessung ermittelt werden und liefert dann dem Bediener der landwirtschaftlichen Maschine wichtige Informationen zur Einstellung und Steuerung der Maschine. Insbesondere bei einer vorausschauenden Bodenabtastung wird dieser Parameter vor dem Ernten erfasst und zur Verfügung gestellt.
Insbesondere eignet sich der erfindungsgemäße Radarsensor zur Ermittlung eines zusätzlichen Parameters wie die Dichte und/oder die Feuchte des Feldbewuchses.

Diese Parameter können vorteilhaft aus dem Empfangsignal insbesondere aus dem Rauschsignal, welches durch die Durchleuchtung des Feldbestandes entsteht, ermittelt werden.

In einer Weiterbildung der Erfindung wird der wenigstens eine, von zumindest einem Sensor ermittelte Parameter zur automatischen Einstellung und/oder Steuerung der landwirtschaftlichen Maschine verwendet. Eine automatische Steuerung der landwirtschaftlichen Maschine wird hierdurch möglich, insbesondere wird die landwirtschaftliche Maschine schon vor dem Ernten des sensierten Feldbewuchses auf die entsprechenden Parameter automatisch eingestellt. Dies geschieht berührungslos und ohne zusätzlichen Sensor. Vorteilhaft kann mit einer optimierten Einstellung der landwirtschaftlichen Maschine geerntet beziehungsweise die Spurführung verbessert werden.

Erfindungsgemäß wird der wenigstens eine Sensor am Vorsatzgerät angeordnet. Diese Anordnung ermöglicht eine frühzeitige Erfassung des wenigstens einen Abstandes zum Boden. Ferner kann der wenigstens eine dort angeordnete Sensor mit einer geringeren Messentfernung/Abtastentfernung ausgelegt werden, wodurch die Kosten für den Sensor geringer ausfallen. Ein weiterer Vorteil entsteht bei dieser Anordnung durch die direkte Veränderung des gemessenen Abstandes bei einer Verstellung des Vorsatzgerätes in der Lage zum Boden. Die geänderte Einstellung wird direkt von dem wenigstens einen Sensor erkannt, so dass auf weitere Sensoren zur Erfassung der Lage des Vorsatzgerätes und eine Umrechnung des ermittelten Abstandwertes auf die notwendige Vorsatzhöhe verzichtet werden kann. Eine Anordnung des wenigstens einen Sensors am Vorsatzgerät an Stelle der Bodentaster, erbringt bei geringer Arbeitshöhe die gleiche Funktionalität der Bodenkopierung für das Vorsatzgerät. Jedoch bei größeren Arbeitshöhen zeigt sich der Unterschied. Die erfindungsgemäßen Sensoren verlieren den Kontakt zum Boden nicht und eine Bodenkopierung auch bei größeren Arbeitshöhen wird gewährleistet. Auch erbringt diese Anordnung ohne große Aufwendungen die Möglichkeit, den Abtaststrahl eines Lasersensors lotgerecht beziehungsweise senkrecht zum Boden hin ausrichten zu können.

In einer weiteren Ausgestaltung der Erfindung ist der wenigstens eine Sensor in einem Abteiler des Vorsatzgerätes angeordnet. Diese Anbringung ermöglicht vorteilhaft eine geschützte, dicht oberhalb des Bodens liegende Anbringung des Sensors und gestattet eine einfache vorausschauende Ermittlung des Abstandes zum Boden. Vorteilhaft werden die Herstellkosten eines Sensors durch diesen Anbringungsort und die damit erreichbare, kürzere Abtastentfernung reduziert. Insbesondere für einen im Abteiler angeordneten Lasersensor entsteht der Vorteil, dass durch den Abteiler der Feldbewuchs auseinander gedrückt und der Blick zum Boden verbessert wird. Das erfindungsgemäße Vorbeischauen der fokussierten elektromagnetischen Welle am Feldbewuchs wird hiermit zusätzlich verbessert und eine annähernd senkrechte Ausrichtung des Abtaststrahls bei gleichzeitig vorausschauender Abtastung des Bodens wird weiterhin auf einfache Weise vorteilhaft ermöglicht.

Eine weitere vorteilhafte Ausgestaltung der Erfindung ist dadurch gekennzeichnet, dass der wenigstens eine Sensor oberhalb des ungeernteten Feldbewuchses in Fahrtrichtung der landwirtschaftlichen Maschine voraus angeordnet ist. Diese Anordnung ermöglicht eine vorrausschauende Abtastung der Oberfläche des stehenden beziehungsweise ungeernteten Feldbewuchses bei gleichzeitig möglichst geringer Abtastentfernung. Ferner wird hierdurch vorteilhaft auch eine lotrechte beziehungsweise senkrechte Ermittlung des Abstandes zum Boden vorausschauend möglich, wodurch eine einfach Auswertung und eine direkte Verwendung der Abstandswerte zur Bodenkopierung und zur Spurführung ermöglicht wird.

Die Erfindung wird nachstehend durch Ausführungsbeispiele anhand von Zeichnungen näher erläutert.
Es zeigen:
- Figur 1: einen Mähdrescher mit mehreren in Fahrtrichtung voraus angeordneten Messeinrichtungen,
- Figur 2: einen Mähdrescher mit mehreren Messeinrichtungen in einer Draufsicht,
- Figur 3: einen Mähdrescher in der Frontansicht mit an mehreren Stellen unterhalb des Getreideschneidwerks angeordneten Messeinrichtungen und
- Figur 4: eine Draufsicht auf ein Feld mit Pflanzen und verschiedene Abtastverfahren.

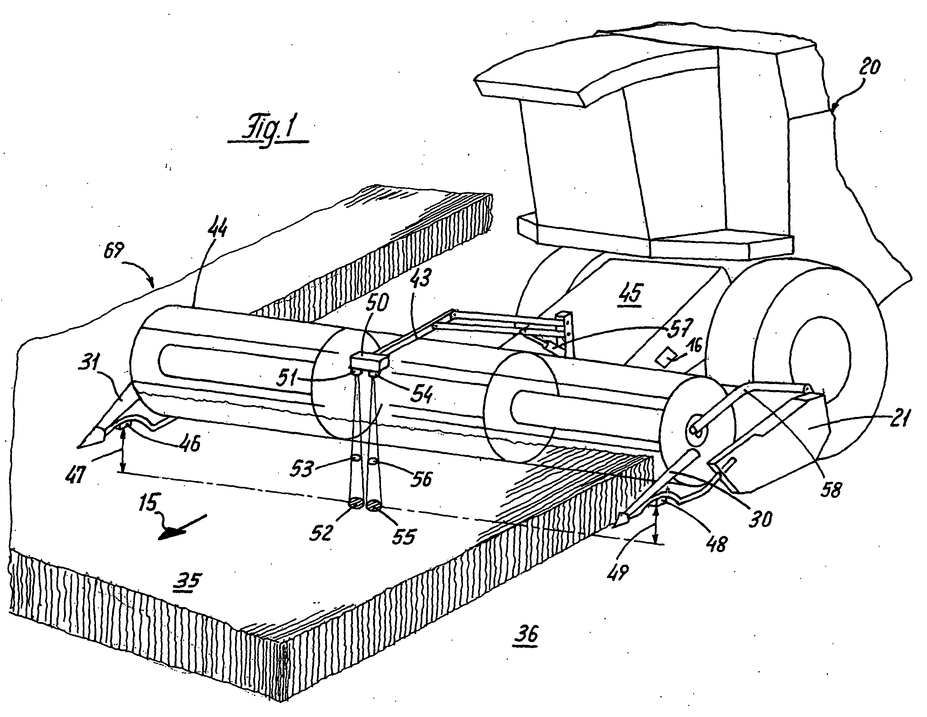

Figur 1 zeigt einen Mähdrescher 20 mit mehreren in Fahrtrichtung 15 voraus angeordneten Messeinrichtungen 46;48 und 50. Diese tasten den Abstand zum Boden in Fahrtrichtung 15 voraus berührungslos an mehreren Stellen ab und ermöglichen eine vorzeitige Erkennung von Änderungen im Höhenprofil des Bodens sowie eine hierauf rechtzeitige Reaktion der Steuerung der Bodenkopierung des Getreideschneidwerks 21. Das Getreideschneidwerk 21 wird von dem Einzugskanal 45 getragen und kann durch diesen in der Höhe gegenüber dem Boden eingestellt werden. Die Querneigung des Getreideschneidwerks 21 wird durch eine entsprechende Aufnahme über zwei höhenbewegliche Tragzapfen am Einzugskanal 45 und dessen Steuerung ermöglicht. An dem Getreideschneidwerk 21 ist eine Haspel 44 angeordnet. Diese kann zur Anpassung an verschiedene Erntegüter und an verschiedene Bestandhöhen gegenüber dem Getreideschneidwerk 21 durch beiderseitig beweglich angeordnete Haspeltragarme 58 in der Höhe verändert werden.
An dem Getreideschneidwerk 21 ist auf der Hälfte der Arbeitsbreite ein Radarsensor 50 höhenbeweglich an einem Haltearm 43 oberhalb des Getreidefeldes 35 angeordnet. Die Höhe des Radarsensors 50 kann durch einen Hubzylinder 57 eingestellt und in Verbindung mit der Höheneinstellung der Haspel 44 erfolgen. Eine möglichst geringe Sichtbehinderung für den Bediener des Mähdrescher 20 und eine möglichst dichte Ausrichtung des Radarsensors 50 an der Bestandsoberfläche ist somit möglich. Der Radarsensor 50 beinhaltet zwei Hornantennen 51 und 54. Jede Hornantenne 51;54 bündelt eine elektromagnetische Welle und richtet sie zum Boden des Feldes 69 hin aus. Die Sendesignale des Radarsensors 50 durchdringen den Getreidebestand 35 und werden an der Oberfläche des Bodens reflektiert. Für die erfindungsgemäße Ermittlung eines Abstandsignals eignen sich insbesondere als Radarsensor 50 der sogenannte CW- (continous wave) Radarsensor. Dieser arbeitet mit elektromagnetischen Wellen im Mikrowellenbereich mit einer international freigegebenen Frequenz von beispielsweise 24GHz. Es hat sich auch in Versuchen gezeigt, dass die Verwendung dieser Frequenz zur Durchdringung von in der Landwirtschaft vorkommendem Feldbewuchs 35;36 besonders geeignet ist. Radarsignale mit weiteren Frequenzen sind durchaus verwendbar, wobei die Verwendung höherer Frequenzen stärker und niedrigere Frequenzen weniger von dem Feldbewuchs 35;36 beeinflusst beziehungsweise reflektiert werden.
Durch verschiedene Modulationen des Sendesignals des Radarsensors 50, können die verwendeten Radarsensoren 50 an den jeweiligen Anwendungsfall angepasst eingesetzt werden. Für die erfindungsgemäße Abstandsmessung eignet sich insbesondere eine sinusförmige Frequenzmodulation (SFM) oder eine lineare Frequenzmodulation (LFM) der Trägerfrequenz. Ein nach dem SFM- Verfahren gesendetes Radarsignal kann zur Ermittlung des Abstandes zu einem Ziel herangezogen werden, wobei ein nach dem LFM- Verfahren gesendetes Radarsignal die Ermittlung von mehreren Abständen zur mehreren Zielen ermöglicht. Zur Ermittlung der Entfernung zu mehreren Zielen ist der Radarsensor 50 mit einer FFT- Auswertung (Fast Fourier Transformation) und einer entsprechenden Hardware mit einem Digital Signal Prozessor (DSP) ausgestattet. Aus dem Empfangsignal wird anhand einer Frequenzanalyse der jeweilige Abstand zu einem Ziel bestimmt.
Der hier verwendetet Radarsensor 50 arbeitet nach dem LFM- Verfahren und ermittelt aus dem Empfangssignal, den Abstand zu einem ersten Detektionsbereich 52 "Boden" und zu einem weiteren Detektionsbereich 53 "Getreideoberfläche". Anhand dieser ermittelten Werte kann die Einstellung des Mähdreschers 20 und insbesondere das Getreideschneidwerk 21 automatisch in der Höhe geführt beziehungsweise die Lage des Messerbalkens und der Haspel 44 automatisch an den Getreidebestand 35 und die gewünschte Stoppelhöhe angepasst werden.
Ferner ist eine Auswertung des Rauschsignals aus dem Empfangssignal zwischen den beiden Detektionsbereichen 52;53 möglich. Dieses Rauschsignal beinhaltet Informationen über die Dichte beziehungsweise die Feuchte des Getreidebestandes 35. Der Radarsensor 50 kann diese Informationen auswerten und für eine Anzeige beziehungsweise Einstellung und/oder Steuerung des Mähdreschers 20 bereitstellen. Eine entsprechende Kartierung der Höhe des Getreidebestands 35, der Bestandsdichte sowie der Feuchte in Verbindung mit einer navigierten Position auf dem Feld 69 liefert eine entsprechende Karte mit ortsbezogenen Information und ermöglicht eine spätere Beurteilung und Verwendung dieser Informationen über das Feld 69.
Der Radarsensor 50 ist mit einer weiteren Hornantenne 54 ausgestattet und ermittelt den Abstand zu weiteren Detektionsbereichen 55 und 56,wobei die Hornantenne 54 so am Radarsensor 50 ausgerichtet angeordnet ist, dass die Detektionsbereiche 55 und 56 jeweils benachbart zu den Detektionsbereichen 52 und 53 auftreten. Die doppelte benachbarte Detektion des Getreidebestandes 35 und des Bodens ermöglicht eine verbesserte Erkennung des jeweiligen Abstandes und der weiteren Information des Getreidefeldes 35. Hierdurch lassen sich Fehlmessungen durch Fahrspuren eliminieren und eine Aussage über das Höhenprofil des Bodens und der Getreideoberfläche auch quer zur Fahrtrichtung 15 ableiten.

Für die vorliegende Anordnung des Radarsensor 50 oberhalb des Getreidebestandes 35 eignet sich auch das SFM- Verfahren. Die erfindungsgemäße Ermittlung des Abstandes zum Boden durch das Getreidefeld 35 hindurch ist hiermit möglich. Der Abstandswert wird durch eine einfache Auswertung des Empfangssignals in Verbindung mit dem Sendesignal anhand einer Amplituden- und Phasenlagenauswertung ermittelt.
Gegenüber den Radarsensoren 50, die nach dem LFM Verfahren arbeiten, ergibt sich eine einfache kostengünstigere Hardware des Radarsensors 50. Die Anordnung von zwei Hornantennen 51 und 54 am Radarsensor 50 ermöglich in Verbindung mit der Verwendung des SFM- Verfahrens weiterhin eine Messung des Abstandes zum Boden mit einer ersten Hornantenne 51 und zu der Getreideoberfläche durch eine weitere Hornantenne 54. Eine einfache Ausstattung des Radarsensors 50 mit nur einer Hornantenne 51 oder 54 ist ferner denkbar und ermöglicht zumindest die Messung des Abstandes zum Boden. Ferner ist eine besondere Kombination aus einem Radarsensor 50 zur Bodendetektion und einem Lasersensor 46;48 zur Oberflächendetektion anstelle des gezeigten Radarsensors 50 möglich.

An den Abteilern 30 und 31 des Getreideschneidwerkes 21 sind jeweils ein Lasersensor 46 und 48 angeordnet. Diese ermitteln mit punktförmigen Abtaststrahlen 47;49, die annähernd senkrecht zum Boden hin ausgerichtet sind, die Höhe des Getreideschneidwerks 21 über dem Boden. Die von den Lasersensoren 46;48 ermittelten Abstandswerte werden einer am Einzugskanal 45 angeordneten Auswerteeinheit 16 zugeführt. Diese Auswerteinheit 16 ermittelt aus den Abstandswerten der Lasersensoren 46;48 die entsprechenden Steuersignale für eine weitere nicht dargestellte Steuereinrichtung, um das Getreideschneidwerk 21 mit einem jeweiligen gleich großen Abstand zum Boden und außerdem mit einer vorgegebenen Sollarbeitshöhe führen zu können. Die Auswerteeinheit 16 kann ferner an dem Getreideschneidwerk 21 selbst angeordnet oder Teil einer zentralen Steuerung des Mähdreschers 20 sein. Ferner können auch die von dem Radarsensor 50 ermittelten Abstandswerte zum Boden der besagten Auswerteeinheit 16 zugeführt und zur Bodenkopierung des Getreideschneidwerks 21 insbesondere in Verbindung mit den Abstandswerten der Lasersensoren 46;48 verwendet werden.
Die Lage des Lasersensors 46 ist durch seine Anordnung am Abteiler 31 innerhalb des Getreidefeldes 35 vorgegeben. Hier ermittelt er im Bereich des von dem Abteiler 31 geteilten Getreidefeldes 35 den Abstand zu einem eventuell bestehenden Unterbewuchs im Getreidefeld 35 und erfindungsgemäß an diesem vorbei den Abstand zum Boden. Durch die Bewegung des Mähdreschers 20 tastet der Abtaststrahl 47 in Fahrtrichtung 15 den Abstand zum Boden hin entlang einer Linie hintereinander ab, wodurch eine scannende Wirkung des starr gerichteten Abtaststrahls 47 entsteht. Die ermittelten Abstandswerte werden in einem Speicher in beispielsweise dem Sensor oder der Auswerteeinheit hinterlegt. Aus den ermittelten Abtastwerten kann von der Auswerteeinheit ein Höhenprofil in Fahrtrichtung 15 erstellt werden. Anhand der im Höhenprofil maximal auftretenden Abstandswerte werden diese Abstandswert per Definition zu Abstandswerte zum Boden definiert und dann zumindest zur Höhenführung des Getreideschneidwerks 21 verwendet. Ferner kann in einem Sensor oder in einer Auswerteeinheit ein Ringspeicher vorhanden sein, in welchem die hintereinander ermittelten Abstandswerte eines Sensors abgespeichert werden. Der größte im Speicher befindliche Abstandswert wird dann erfindungsgemäß zur Steuerung der Bodenkopierung des Getreideschneidwerkes 21 verwendet.
Der in dem linken Abteiler 30 angebrachte Lasersensor 48 unterscheidet sich von der Funktion des Lasersensor 46 im rechten Abteiler 31 nicht, ist aber, wie in der Figur 1 gezeigt, außerhalb des Getreidefeldes 35 im Bereich des Stoppelfeldes 36 angeordnet. Je nach Arbeitshöhe des Abteilers 31 tastet der Abtaststrahl 49 dann den Abstand zu den Stoppeln, dem Unterbewuchs und zum Boden ab.

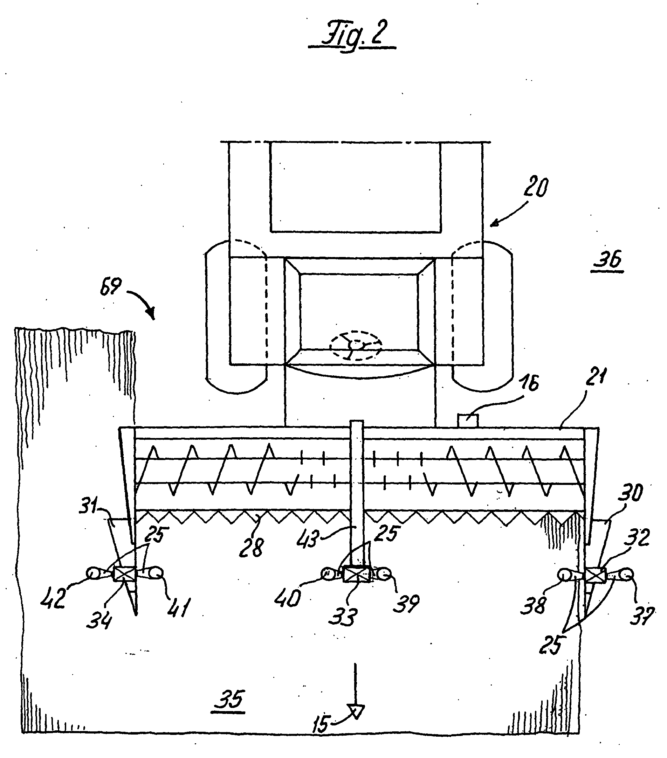

In Figur 2 ist ein Mähdrescher 20 mit mehreren daran angebrachten Messeinrichtungen 32;33;34 in einer Draufsicht dargestellt. In Fahrtrichtung 15 gesehen sind diese Messeinrichtungen 32;33;34 als Radarsensoren 32;33;34 mit je zwei Antennen 51;54 ausgebildet und vor dem Messerbalken 28 angeordnet. Allgemein lässt sich die Abstrahlcharakteristik eines Radarsensors 50 durch eine Formgebung der Antennen 51;54 insbesondere durch geformte Hornantennen 51;54 beeinflussen, so dass beispielsweise auch in Verbindung mit der gezeigten Anbringung, durch eine ovale Ausgestaltung der Öffnungsfläche des Horns, eine annähernd runde Abtastfläche 37;38;39;40;41;42 auf dem Boden des Feldes 69 erzeugt werden kann. Hiermit wird eine Reduzierung der Abtastflächen 37;38;39;40;41;42 erzielt. Das Empfangssignal stammt somit von einer optimierten geringen Abtastfläche 37;38;39;40;41;42, wodurch ein zeitlich dicht zusammenliegendes Empfangssignal entsteht. Ein erster Radarsensor 32 ist an dem linken Abteiler 30 des Getreideschneidwerks 21 angeordnet und tastet mit einem ersten Abtastsignal 25 den Abstand zu einer ersten Abtastfläche 37 am Boden des Stoppelfeldes 36 berührungslos ab. Auf einer weiteren Abtastfläche 38 ermittelt dieser Radarsensor 32 mit einem weiteren Abtastsignal 25 einen weiteren Abstand zum Boden des Getreidefeldes 35. An einem Haltearm 43 ist in der Mitte des Getreideschneidwerks 21 oberhalb des Getreidefeldes 35 ein weiterer Radarsensor 33 angeordnet. Dieser ermittelt mit einem ersten Abtastsignal 25 den Abstand zu einer ersten Abtastfläche 39 und mit einem weiteren Abtastsignal 25 den Abstand zu einer weiteren Abtastfläche 40 jeweils innerhalb des Getreidefeldes 35. An dem rechten Abteiler 31 des Getreideschneidwerks 21 ist ein weiterer Radarsensor 34 angebracht. Dieser ermittelt an zwei quer zur Fahrtrichtung 15 voneinander beabstandeten Stellen den Abstand zum Boden im Getreidefeld 35. Mit einem ersten Abtastsignal 25 wird der Abstand zu der ersten Abtastfläche 41 und mit einem weiteren Abtastsignal 25 der Abstand zu der weiteren Abtastfläche 42 ermittelt.
Die paarweise von jeweils einem Radarsensor 32;33;34 ermittelten Abstandswerte werden von den Radarsensoren 32;33;34 jeweils miteinander zu einem Abstandswert verrechnet. Dabei kann durch eine Mittelwertbildung der beiden Abstandswerte, ein mittlerer Abstandswert generiert beziehungsweise nach einer entsprechenden Bewertung, jeweils nur einer der beiden Werte für die weitere Verwendung ausgewählt werden. Die einzelnen Abstandswerte können auch einer gemeinsamen Auswerteeinheit 16 zugeführt, entsprechend bewertet und zur Steuerung der Bodenkopierung des Getreideschneidwerks 21 verwendet werden. So können aus mehreren Abstandssignalen beispielsweise nur zwei Abstandswerte von zwei Sensoren 32;33;34 zur Steuerung der Bodenkopierung des Getreideschneidwerks 21 ausgewählt, verwendet und die weiteren Abstandswerte als in einer Spur oder auf einer Bodenerhöhung liegend verworfen werden. Insbesondere ist diese Auswahl durch die Bestimmung einer Gerade, die mit einer möglichst geringen Fehlerabweichung durch alle Abstandswerte geht, möglich. Die Abstandswerte, die mit der geringsten Fehlerabweichung von der bestimmten Gerade liegen, werden als relevante Abstandswerte ausgewählt und zur Bodenkopierung verwendet.
Die gezeigten Radarsensoren 32;33;34 können auch durch erfindungsgemäße Messeinrichtungen mit zum Beispiel bewegten Abtastsignalen 25 beispielsweise einer bewegten Antenne 51;54 oder auch durch jeweils zwei Lasersensoren 46;48 beziehungsweise durch jeweils einen Laserscanner ersetzt werden. Diese ermitteln dann alternativ jeweils an den Stellen der gezeigten Abtastflächen 37;38;39;40;41;42 zumindest einen Abstandswert. Wobei zumindest die von den äußeren Sensoren 32;34 ermittelten Abstandswerte auch zur Spurführung des Mähdreschers 20 herangezogen werden können.

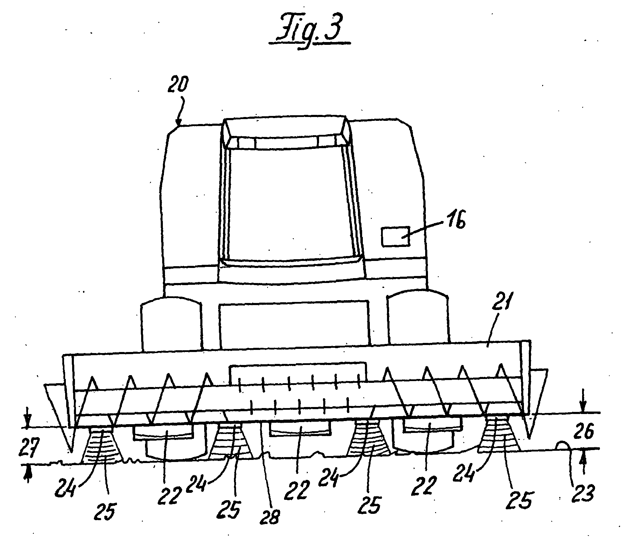

In der Figur 3 wird ein Mähdrescher 20 in der Frontansicht mit mehreren unterhalb des Getreideschneidwerks 21 angeordneten Messeinrichtungen 24 gezeigt. Zur Höhensteuerung beziehungsweise zur Querneigungssteuerung des Getreideschneidwerkes 21 sind über die gesamte Arbeitsbreite verteilt, vier als Radarsensoren 24 ausgeführte Messeinrichtungen 24 angeordnet, die mittels einer elektromagnetischen Welle erfindungsgemäß den Abstand zum Boden 23 ermitteln. Die Radarsensoren 24 sind so ausgerichtet, dass mittels des jeweiligen Abtastsignals 25 direkt der senkrechte Abstand zum Boden 23 ermittelt werden kann. Der jeweilige Radarsensor 24 besitzt eine planare Antenne und ist auf gleichem Abstand in Fahrtrichtung 15 hinter dem Messerbalken 28 des Getreideschneidwerks 21 angeordnet. Hierdurch kann über die Arbeitsbreite verteilt der Abstand vom Boden zum Getreideschneidwerk 21 ermittelt und die Schnitthöhe 26;27 des Getreideschneidwerks 21 von einer Auswerteeinheit 16 überwacht und entsprechende Steuersignale zur Bodenkopierung generiert werden. Die gezeigten Schnitthöhen 26;27 sind im dargestellten Beispiel gleich groß und werden entsprechend einer Sollhöhe automatisch geregelt. Treten Unebenheiten auf dem Boden 23 des Feldes auf, werden diese von zumindest einem Radarsensor 24 durch eine Abstandsänderung erkannt. Die automatische Regelung der Bodenkopierung steuert den Abstand des Messerbalkens 28 in der Höhe über dem Boden 23 und in der Querneigung so, dass das Getreideschneidwerk 21 möglichst ohne Bodenkontakt und parallel zum Bodenprofil geführt gehalten wird. Die unterhalb des Getreideschneidwerks 21 angebrachten Gleitkufen 22 berühren in der gezeigten Darstellung den Boden 23 nicht, schützen aber die Radarsensoren 24 vor Beschädigungen und insbesondere dann, wenn das Getreideschneidwerk 21 dicht am Boden 23 geführt verwendet wird. Eine Anordnung der Radarsensoren 24 hinter den Geleitkufen 22 ist außerdem möglich und würde den Schutz vor Beschädigungen weiter erhöhen.
Die gezeigten vier Radarsensoren 24 können jeweils zur Ermittlung des Abstandes eine separate Auswerte- und Steuereinrichtung besitzen und den ermittelten Abstandswert über bekannte elektrische Verbindungswege an eine Einrichtung zur automatischen Bodenkopierung des Getreideschneidwerks 21 übermitteln. Weiterhin kann die erfindungsgemäß verwendete elektromagnetische Welle und die entsprechende Modulation des Sendesignals für die Radarsensoren 24 von einer Einrichtung erzeugt und im Multiplexerbetrieb an die einzelnen Antennen übergeben werden. Eine entsprechende Auswertung der Empfangssignale kann ebenfalls von einer Auswerteeinrichtung für alle Radarsensoren 24 erfolgen. Das jeweilige Empfangssignal wird hierbei mittels eines Hochgeschwindigkeitsschalters (Multiplexer) nacheinander einer Auswerteeinrichtung zugeführt und der jeweilige Abstand von der Auswerteeinrichtung entsprechend ermittelt.
An Stelle der Radarsensoren 24 können auch erfindungsgemäß jeweils Lasersensoren 46;48 verwendet werden, wobei die dargestellten Abtastsignale 25 dann lediglich von einem starren Laserstrahl 47;49 gebildet werden. Ferner ist die Verwendung eines Laserscanners anstelle eines Radarsensors 24 möglich. Das gezeigte Abtastsignal 25 zeigt dann eine Abtastebene an, in welcher der punktförmige Laserstrahl 47;49 oszillierend bewegt, den Abstand an mehreren quer zur Fahrtrichtung 15 liegenden Stellen zum Boden 23 abtastet. Erfindungsgemäß wird der jeweils größte ermittelte Abstand als Entfernungswert zum Boden definiert und zur Steuerung der automatischen Bodenkopierung des Getreideschneidwerkes 21 verwendet.

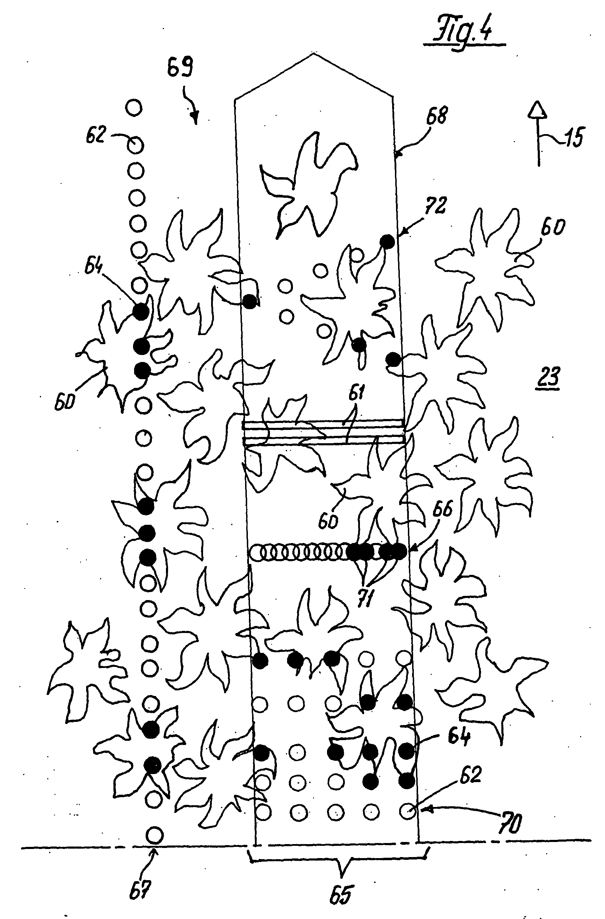

Die Figur 4 zeigt eine Draufsicht auf ein Feld 69 mit darauf verteilten Pflanzen 60. Diese Pflanzen 60 stellen den Feldbewuchs dar, wobei es sich hier um großblättrige Pflanzen 60 wie beispielsweise Unkraut handelt. Diese sind ungeordnet, verteilt auf dem Boden 23 gewachsen. Erfindungsgemäß wird durch die Bewegung des Mähdreschers 20 in Fahrtrichtung 15 das Höhenprofil des Feldes 69 mittels der Radarsensoren 24;32;33;34;50 oder der Lasersensoren 46;48 abgetastet. Die Auflösung wird dabei von der Fahrgeschwindigkeit des Mähdreschers 20, der Abtastfläche und der Abtastrate des Sensors 24;32;33;46;48;50 bestimmt.

Zur Veranschaulichung des erfindungsgemäßen Messprinzips wird nachfolgend dies anhand eines Lasersensors 46;48 beschrieben und dabei auf eine Darstellung von weiterem Feldbewuchs wie Grashalme oder Stoppeln verzichtet. Durch einfache Kreisflächen werden Abtastpunkte 62;64 eines senkrecht zum Boden hin ausgerichteten punktförmigen Abtaststrahls 47;49 dargestellt, wobei die Kreisflächen durch dargestellte Kreise in Abtastpunkte 62 "Fern" (Boden) und durch ausgefüllte Kreisflächen in Abtastpunkte 64 "Nah" (Feldbewuchs) unterschieden werden. Diese Definition wird zur Veranschaulichung des erfindungsgemäßen Messprinzips gewählt und dient der Unterscheidung zwischen den Abtastwerten, die von dem Boden 23 und denen die von den Pflanzen 60 reflektiert werden. Abtastpunkte "Fern" 64 werden somit vom Boden 23 und Abtastpunkte 64 "Nah" von einer Pflanze 60 reflektiert.

Die Abtastreihe 67 zeigt das Ergebnis einer erfindungsgemäßen Abtastung des Feldes 69 bei einem in Richtung des Bodens 23 ausgerichteten starren Abtaststrahls 47;49. Der Lasersensor 46;48 ist beispielsweise in dem Abteiler 30;31 eines Getreideschneidwerks 21 angeordnet. Dieses wird von einem Mähdrescher 20 getragen in Fahrtrichtung 15 über das Feld 69 bewegt, wobei der Abstand der nebeneinander liegenden Abtastpunkte 62;64 von der Fahrgeschwindigkeit des Mähdreschers 20 und der Abtastrate des Lasersensors 46;48 bestimmt wird. Der Lasersensor 46;48 sendet dabei mit einer bestimmten Rate fokussierte elektromagnetische Wellen in Form von Lichtsignalen aus und ermittelt über die Laufzeit des Abtaststrahls 47;49, den Abstand zu einem reflektierenden Gegenstand 23;60. In dem gezeigten Beispiel kann dies die Pflanze 60 oder der Boden 23 sein. Trifft nun der Abtaststrahl 47;49 zumindest teilweise auf eine Pflanze 60, wird dieser zum Lasersensor 46;48 reflektiert und die gemessene Laufzeit zwischen dem Senden und Empfangen der elektromagnetischen Welle als ein Abstandswert 64 "Nah" erkannt. Steht dem Laserstahl keine Pflanze 60 im Weg, wird er am Boden 23 reflektiert und eine entsprechende größere Entfernung wird als Abstandswert 62 "Fern" erkannt. Der Lasersensor 46;48 selbst oder eine nachgeschaltete Auswerteelektronik ordnet die ermittelten Entfernungswerte beispielsweise jeweils einer Charakteristik Nah/Fern zu und leitet nur die Abstandswerte mit dem Charakter "Fern" einer Höhen- beziehungsweise Querneigungssteuerung für das Getreideschneidwerk 21 zu, wobei dann anhand der ermittelten Abstände die automatische Bodenkopierung vorgenommen wird.
In der praktischen Anwendung zeigen sich bei der beschriebenen Abtastung jeweils Entfernungssprünge zwischen der Abtastung einer vom Boden beabstandeten Pflanze 60 und dem Boden 23. Diese Entfernungssprünge entstehen auch bei der Abtastung von auf dem Boden liegenden Erdhaufen, Steinen und Strohhalmen. Da das Bodenprofil in der Regel derartige Sprünge nicht aufweist, können diese Entfernungssprünge zur Selektion der Abstandswert verwendet und damit für die Bodenkopierung unrelevanten Abstandswerte herausgefiltert werden. Insbesondere kann durch die vorausschauende Abtastung vor dem Getreideschneidwerk 21 der Abstandswert in einem Speicher aufgezeichnet und die nach einem erkannten Entfernungssprung auftretenden Abstandswerte zunächst beobachtet werden. Steht der nach dem Entfernungssprung ermittelten Abstandswerte weiter an (mehrere Abstandswerte haben einen annähernd gleichen Wert), handelt es sich um eine anhaltende Veränderung des Bodenprofils, worauf dann dieser Wert als Abstandswert zum Boden 23 erkannt und zur Steuerung der Bodenkopierung verwendet wird. Folgt jedoch dem Entfernungssprung unmittelbar ein weiterer Entfernungssprung, so wurde zuvor eine auf dem Boden 23 liegende Sichtbehinderung zum Boden oder eine Vertiefung im Boden von dem Abtaststrahl 47;49 abgetastet und dieser zuvor ermittelte Abtastwert für eine Verwendung zur Steuerung der Bodenkopierung verworfen.

Zur Vermeidung von Abtastungen der Höhe des Getreideschneidwerks 21 über dem Boden 23 beispielsweise in Fahrspuren, Vertiefungen oder Löchern auf dem Feld 69, können dann wie zuvor beschrieben, mehrere erfindungsgemäße Lasersensoren 46;48 über die Arbeitsbreite des Getreideschneidwerkes 21 verteilt angeordnet und die von den einzelnen Lasersensoren 46;48 erzeugten Abstandswerte von einer übergeordnete Auswerteeinheit 16 entsprechend bewertet, der Steuerung für die Bodenkopierung zugeführt werden. Eine paarweise Anordnung beispielsweise in einem Abstand von 0,5m unterhalb des Getreideschneidwerkes 21 hat sich als hierfür vorteilhaft herausgestellt. Die einzelnen Lasersensoren 46;48 werten dann zunächst nach den beschrieben erfindungsgemäßen Verfahren, die Abstandswerte, die den Abstand zum Boden 23 angeben, aus und leiten diese dann über bekannte elektrische Mittel beispielsweise über eine CAN-Bus Verbindung der gemeinsamen Auswerteeinheit 16 zu. Die Auswerteeinheit 16 kann selbstverständlich auch Bestandteil der Steuerung für die Bodenkopierung sein. Eine optimale Einstellung des Getreidescheidwerk 21 zur Einhaltung einer vorgegebenen Arbeitshöhe über die gesamte Arbeitsbreite wird erfindungsgemäß hierdurch gewährleistet.

In der Figur 4 werden ferner beispielhaft weitere Ausgestaltungen der Erfindung gezeigt. Dabei handelt es sich um Ausführungsbeispiele, bei denen erfindungsgemäß zumindest ein Abtaststrahl 47;49 eines Lasersensors 46;48 in der Ruhelage zum Boden hin annähernd senkrecht ausgerichtet, quer zur Fahrtrichtung 63 um die Ruhelage oszillierend bewegt den Boden 23 mehrfach über die Abtastbreite 65 eines Abtastbandes 68 abtastet. Die einzelnen gezeigten Ausführungsbeispiele sind unterschiedlich in der jeweiligen Abtastrate des Lasersensors 46;48. Der Lasersensor 46;48 tastet somit punktweise quer zur Fahrtrichtung 15 des Mähdreschers 20 einen Bereich des Feldes 69 ab. In Verbindung mit der Bewegung des Mähdreschers 20 entstehen in dem Abtastband 68 somit gegenüber der zuvor genannten starren Anbringung, mehrere in Fahrtrichtung 15 gesehen, nebeneinander liegende Abtastreihen 67. Hierdurch wird erfindungsgemäß die Wahrscheinlichkeit an den Pflanzen 60 vorbei den Abstand zum Boden 23 ermitteln zu können weiter erhöht.

In der ersten dargestellten Reihe 70 werden innerhalb der Abtastbreite 65 Entfernungswerte zu fünf Abtastpunkten 62 ermittelt, wobei die Entfernung zum Boden 23 hierbei fünfmal abgetastet wird. In der in Fahrtrichtung 15 nachfolgenden Reihe kann der Boden 23 nur anhand von drei der fünf Abtastpunkten ermittelt werden.
Die Reihe 66 zeigt ein weiteres Beispiel, wobei die Abtastung von Entfernungswerten hierbei mit einer höheren Abtastrate durchgeführt wird. Dies ist an der Vielzahl von Abtastpunkten 62;64 innerhalb der Abtastbreite 65 zu sehen. Die mit dem Bezugszeichen 71 versehenen Abtastpunkte beinhalten Teile einer Pflanze 60 und fallen daher unter die Charakteristik "Nah" (Feldbewuchs/Pflanze).

Nachfolgend wird ein weiteres Beispiel anhand von zwei Abtastflächen 61 gezeigt. Gegenüber den vorherigen Beispielen wurde die Abtastrate des Lasersensors 46;48 derart erhöht, dass eine dichte Aneinanderreihung von Abtastpunkten, eine Einzelpunkt-Darstellung nicht mehr ermöglicht. Die einzelnen Abtaststrahlen 47;49, die innerhalb der Abtastfläche 61 von der Pflanze 60 reflektiert werden, werden als Abtastpunkte "Nah" erkannt und leisten daher keinen Beitrag zur Steuerung für die Bodenkopierung des Getreideschneidwerks 21. Der hierbei verwendete Abtaststrahl 47;49 ist ferner gegenüber dem in den vorherigen Beispielen gezeigten Abtaststrahl 47;49 stärker fokussiert, so dass die Abtastfläche 61 schmaler ist und der Abtaststrahl 47;49 erfindungsgemäß mit einer höheren Wahrscheinlichkeit durch ein geringeres Sichtfenster zum Boden gelangen kann.

Als letztes Beispiel wird eine Zick-Zack- Abtastung 72 innerhalb des Abtastbandes 68 gezeigt. Diese Form der Abtastung entsteht durch eine oszillierende Bewegung des Abtaststrahls 47,49 mit einer geringeren Frequenz, als in den zuvor beschrieben und gezeigten Beispielen 61;66;70 und einer gleichmäßige Fahrgeschwindigkeit des Mähdreschers 20 über das Feld 69.

Die Auswertung der einzelnen ermittelten Entfernungen zu den Abtastpunkten 62;64;71, kann innerhalb einer Zeitspanne, einer Abtastbreite 65 beziehungsweise anhand einer Anzahl von Abtastpunkten 62;64;71 durchgeführt werden. Aus einer Summe von Entfernungswerten wird erfindungsgemäß jeweils der größte Entfernungswert ausgewählt und zumindest für eine Höhensteuerung des Vorsatzgerätes verwendet. Eine entsprechende Mittelung über eine Anzahl von gemessenen Entfernungswerten sowie ein Vergleich beziehungsweise eine Bewertung in Verbindung mit dem oder den zuvor ausgewählten zur Bodenkopierung verwendeten Entfernungswerten, kann ferner durchgeführt werden.
Die Abtastbreite 65 ist ein weiterer einstellbarer Parameter der erfindungsgemäßen Messeinrichtung. Insbesondere wird dieser Parameter in Verbindung mit der Abtastentfernung so variiert, dass bei unterschiedlichen Abtasthöhen jeweils innerhalb des Abtastbandes 68 über eine etwa gleich große Abtastbreite 65 Entfernungswerte ermittelt werden. Die zuvor beschriebenen und gezeigten Beispiele lassen sich auch auf Messeinrichtungen übertagen, die nicht mit Laserstrahlen arbeiten.

Die in den Figuren gezeigten erfindungsgemäßen Messeinrichtungen 24; 32; 33; 34; 46; 48; 50 sind an verschiedenen Stellen an einem Mähdrescher 20 angeordnet dargestellt. Weiterhin werden unterschiedliche Auswerteverfahren für die Abtastsignale erfindungsgemäß verwendet. Es ergibt sich für einen Fachmann in naheliegender Weise die Erfindung auch an Feldhäckslern erfindungsgemäß zu verwenden und die ausgeführten Beispiele durch davon abweichende Anbringungen oder durch weitere separate oder kombinierte Auswerteverfahren, weiter auszugestalten.

### Bezugszeichenliste:

- 15: Fahrtrichtung
- 16: Auswerteeinheit
- 20: Mähdrescher
- 21: Getreideschneidwerk
- 22: Gleitkufen
- 23: Boden
- 24: Radarsensor
- 25: Abtastsignal
- 26: Schnitthöhe
- 27: Schnitthöhe
- 28: Messerbalken
- 30: Abteiler
- 31: Abteiler
- 32: Radarsensor
- 33: Radarsensor
- 34: Radarsensor
- 35: Getreidefeld
- 36: Stoppelfeld
- 37: Abtastfläche
- 38: Abtastfläche
- 39: Abtastfläche
- 40: Abtastfläche
- 41: Abtastfläche
- 42: Abtastfläche
- 43: Haltearm
- 44: Haspel
- 45: Einzugskanal
- 46: Lasersensor
- 47: Abtaststrahl
- 48: Lasersensor
- 49: Abtaststrahl
- 50: Radarsensor
- 51: Hornantenne
- 52: Detektionsbereich
- 53: Detektionsbereich
- 54: Hornantenne
- 55: Detektionsbereich
- 56: Detektionsbereich
- 57: Hubzylinder
- 58: Haspeltragarm
- 60: Pflanzen
- 61: Abtastfläche
- 62: Abtastpunkt "Fern"
- 64: Abtastpunkt "Nah"
- 65: Abtastbreite
- 66: Reihe
- 67: Abtastreihe
- 68: Abtastband
- 69: Feld
- 70: erste Reihe
- 71: Abtastpunkte "Nah"
- 72: Zick-Zack Abtastung

## Patentansprüche

1. Verfahren zur Ermittlung des Abstandes zwischen einer landwirtschaftlichen Maschine und dem Boden, wobei die landwirtschaftliche Maschine aus einer selbstfahrenden Arbeitsmaschine und einem Vorsatzgerät besteht und zumindest ein Sensor den Abstand zwischen dem Vorsatzgerät und der Oberfläche des Feldes berührungslos ermittelt,
**dadurch gekennzeichnet, dass**
der landwirtschaftlichen Maschine (20) wenigstens ein Sensor (24;34;50) zugeordnet ist, der mittels zumindest einer den Feldbewuchs (35;36;60) durchdringenden elektromagnetischen Welle wenigstens den Abstand zum Boden (23) berührungslos ermittelt.

2. Verfahren nach Anspruch 1,
**dadurch gekennzeichnet, dass**
der wenigstens eine Sensor ein Radarsensor (24;33;50) ist.

3. Verfahren nach wenigstens einem der vorherigen Ansprüche 1 oder 2,
**dadurch gekennzeichnet, dass**
der wenigstens eine Radarsensor (24;33;50) mit einer Frequenz von 24 GHz arbeitet.

4. Verfahren nach wenigstens einem der vorherigen Ansprüche 1 bis 3,
**dadurch gekennzeichnet, dass**
das Sendesignal des wenigstens einen Radarsensors (24;33;50) sinusförmig frequenzmoduliert (SFM) wird.

5. Verfahren nach wenigstens einem der vorherigen Ansprüche 1 bis 4,
**dadurch gekennzeichnet, dass**
das Sendesignal des wenigstens einen Radarsensors (24;33;50) linear frequenzmoduliert (LFM) wird.

6. Verfahren zur Ermittlung des Abstandes zwischen einer landwirtschaftlichen Maschine und einem Boden, wobei die landwirtschaftliche Maschine aus einer selbstfahrenden Arbeitsmaschine und einem Vorsatzgerät besteht und zumindest ein Sensor den Abstand zwischen dem Vorsatzgerät und der Oberfläche des Feldes berührungslos ermittelt,
**dadurch gekennzeichnet, dass**
der landwirtschaftlichen Maschine (20) wenigstens ein Sensor (46;48) zugeordnet ist, der mittels zumindest einer wenigstens annähernd senkrecht zum Boden (23) hin ausgerichteten fokussierten, elektromagnetischen Welle an dem Feldbewuchs (35;36;60) vorbei den Abstand zum Boden (23) berührungslos ermittelt.

7. Verfahren nach Anspruch 6,
**dadurch gekennzeichnet, dass**
der wenigstens eine Sensor ein Lasersensor (46;48) ist.

8. Verfahren nach wenigstens einem der vorherigen Ansprüche 1 bis 7,
**dadurch gekennzeichnet, dass**
der wenigstens eine Sensor (24;33;46;50) den Abstand zum Boden (23) durch ein oszillierendes Abtastsignal (25;47) an mehreren Stellen (39;40;52;55;62) ermittelt.

9. Verfahren nach wenigstens einem der vorherigen Ansprüche 1 bis 8,
**dadurch gekennzeichnet, dass**
quer zur Fahrtrichtung (15) der landwirtschaftlichen Maschine (20) an mehreren Stellen (39;40;52;55;62) der Abstand zum Boden (23) ermittelt wird.

10. Verfahren nach wenigstens einem vorherigen Ansprüche 1 bis 9,
**dadurch gekennzeichnet, dass**
zumindest zwei ermittelte Abstandswerte eines Sensors (24;33;46;50) in einem Speicher aufgezeichnet werden und der größte Abstandswert als Abstandswert zum Boden (23) definiert wird.

11. Verfahren nach wenigstens einem der vorherigen Ansprüche 1 bis 10,
**dadurch gekennzeichnet, dass**
der wenigstens eine Sensor (24;33;46;50) den Abstand zum Boden (23) in Fahrtrichtung (15) der landwirtschaftlichen Maschine (20) vorausschauend ermittelt.

12. Verfahren nach wenigstens einem der vorherigen Ansprüche 1 bis 11,
**dadurch gekennzeichnet, dass**
der wenigstens eine ermittelte Abstand zum Boden (23) zur automatischen Steuerung des Abstandes (26;27) des Vorsatzgerätes (21) zum Boden (23) verwendet wird.

13. Verfahren nach wenigstens einem der vorherigen Ansprüche 1 bis 12,
**dadurch gekennzeichnet, dass**
wenigstens zwei ermittelte, quer zur Fahrtrichtung (15) der landwirtschaftlichen Maschine (20) voneinander beabstandete Abstände zum Boden (23) zur Steuerung der Querneigung des Vorsatzgerätes (21) verwendet werden.

14. Verfahren nach wenigstens einem der vorherigen Ansprüche 1 bis 13,
**dadurch gekennzeichnet, dass**
der wenigstens eine Sensor (24;33;46;50) den Abstand zum Boden (23) und wenigstens einen weiteren Abstand zum Feldbewuchs (35;36;60) ermittelt.

15. Verfahren nach wenigstens einem der vorherigen Ansprüche 1 bis 14,
**dadurch gekennzeichnet, dass**
wenigstens zwei quer zur Fahrtrichtung (15) der landwirtschaftlichen Maschine (20) ermittelte Abstandswerte zur Spurführung der landwirtschaftlichen Maschine (20) verwendet werden.

16. Verfahren nach wenigstens einem der vorherigen Ansprüche 1 bis 15,
**dadurch gekennzeichnet, dass**
der wenigstens eine Sensor (24;33;46;50) zumindest einen weiteren Parameter des Feldbewuchses (35;36;60) ermittelt

17. Verfahren nach Anspruch 16,
**dadurch gekennzeichnet, dass**
der zusätzlich ermittelte Parameter die Dichte und/oder die Feuchte des Feldbewuchses (35;36;60) ist.

18. Verfahren nach wenigstens einem der vorherigen Ansprüche 1 bis 17,
**dadurch gekennzeichnet, dass**
der wenigstens eine, von zumindest einem Sensor (24;33;46;50) ermittelte Parameter zur automatischen Einstellung und/oder Steuerung der landwirtschaftlichen Maschine (20) verwendet wird.

19. Messeinrichtung zur Durchführung des Verfahrens nach wenigstens einem der Ansprüche 1 bis 18,
**dadurch gekennzeichnet,**
**dass** der wenigstens eine Sensor (24, 33, 46, 50) am Vorsatzgerät (21) angeordnet ist.

20. Messeinrichtung zur Durchführung des Verfahrens nach wenigstens einem der Ansprüche 1 bis 19,
**dadurch gekennzeichnet,**
**dass** der wenigstens eine Sensor (24, 33, 46, 50) in einem Abteiler (30, 31) angeordnet ist.

21. Messeinrichtung zur Durchführung des Verfahrens nach wenigstens einem der Ansprüche 1 bis 20,
**dadurch gekennzeichnet,**
**dass** der wenigstens eine Sensor (24, 33, 46, 50) oberhalb des ungeernteten Feldbewuchses (35) in Fahrtrichtung (15) der landwirtschaftlichen Maschine (20) voraus angeordnet ist.

## Claims

1. A method of program-controlled representation of an electronic map image on a screen (BS) of a motor vehicle which includes a positioning system (OS) for determining a respective vehicle position and possibly an orientation system for determining the respective direction of travel thereof and/or a screen operating computer (BP) which has access to items of map information (KI) directly or by way of a radio data transmission channel (FK) and accesses same in dependence on the respectively determined vehicle position and processes same for the map image representation into which are respectively introduced a position indicator (OZ) and possibly an item of navigational information (NI),
**characterised in that**
the map information (KI) includes travel-related and/or working-related data in respect of the terrain to be travelled and/or worked and said data are respectively automatically processed selectively in dependence on the respective operating parameters (FI, FV, BI, HPS, ZD) of the vehicle to afford the respective position-related map image representation and wherein the map information (KI) is contained in a plurality of function-specific map databases which are respectively accessed in selected fashion governed by the operation involved for processing of the map image and the contents of which are subpositioned controlledly with operating parameters in relation to the map image.

2. A method according to claim 1 **characterised in that** road configurations, road negotiability data, cut and field boundary configurations, obstacles such as ditches, walls and/or hedges, data in respect of negotiable and non-negotiable kinds of terrain and altitude and gradient data, crop type, degree of maturity and/or working conditions are held as the map information (KI).

3. A method according to claim 1 or claim 2 **characterised in that** vehicle or machine settings for agricultural working of the terrain being respectively negotiated such as travel speed, machine rotary speeds, quantitative discharge flow of a fertilising or spraying means and/or a recommended route are also held as the map information (KI).

4. A method according to one of claims 1 to 3 **characterised in that** current local meteorologically determined data such as wind direction, ground moisture content and/or solar radiation are also held as the map information (KI).

5. A method according to claim 4 **characterised in that** the map databases (KIZ, KIM, KIA) are held in a plurality of spatially separate stations which are related to each other in data transmission connections (DU), in particular with a radio data transmission connection (FK-FKZ) to the screen operating computer (BP) and the map databases (KIZ, KIM, KIA) are accessed by the screen operating computer (BP) in dependence on the mode of operation and in relation to position.

6. A method according to one of the preceding claims **characterised in that** in an on-road travel mode the local road configurations and road negotiability data are processed to form the map image and that in an off-road operating mode the cut and field boundaries, obstacles, types of terrain, altitude and/or gradient configurations are processed to afford the map image and in a working mode in dependence on the respectively predetermined kind of working operating mode-specific operating parameters which are to be locally set such as area-specific discharge amounts, travel speed, machine rotary speeds, cutting height, working routes and/or directions of travel and advance turns are processed from the available associated kinds of maps and the map data thereof and the processed data are respectively displayed.

7. A method according to one of the preceding claims **characterised in that** during the working mode in dependence on an ascertained travel speed, a respective working width and a lift mechanism position, a power take-off shaft speed, a final speed preselection, a respective gear shift lever position and/or other operating parameters working map data, in particular yield and fertility map data, are acquired and stored in function-specific form in a working database and are processed to afford the map image, wherein in particular a working boundary in relation to the terrain which has already been worked is continuously inputted into the map image and a current working strip is continuously inputted into the map and into an associated working map data file.

8. A method of map image representation according to one of the preceding claims **characterised in that** at least one operating parameter, for example the vehicle speed (PV), a lift mechanism position, a power take-off shaft speed, a final speed preselection and/or a respective transmission lever position is continuously fed to the screen operating computer and in dependence thereon the map information (KI) is processed selected in respect of scale and in respect of the selection and/or mode of representation of the cartographic objects.

9. A method of map image representation according to claim 8 **characterised in that** the scale of the map image is so determined in dependence on speed that a section which is correspondingly smaller is represented on a correspondingly more greatly expanded scale, the lower the travel speed (FV) is.

10. A method of map image representation according to claim 8 or claim 9 **characterised in that** the map information (KI) is linked to the content of a colour, pictogram and/or symbol database and the colours, pictograms and/or symbols stored therein are entered into the map image at the positions corresponding to the land register information (KI).

11. A method of map image representation according to one of claims 8 to 10 **characterised in that** the map information (KI) and/or the colour, pictogram and/or symbol database contains respectively associated relevance keys and/or selection keys for establishing in which operating mode and in dependence on which operating parameters the colours, pictograms and/or symbols or other cartographic objects such as contour lines or gradient markings are to be introduced into the map image.

12. A method of map image representation according to claim 11 **characterised in that** the size and/or nature of the pictograms and/or symbols is adapted to the respective map image in respect of scale by suitable selection or size transformation.

13. A method of map image representation according to one of claims 8 to 12 **characterised in that** transformation according to scale of the map image with the colours, lines, pictograms and/or symbols from digital map information (KI) stored in point form is effected in a graphic post-processor (GP).

14. A method of map image representation according to claim 12 or claim 13 **characterised in that** an item of travel direction information (FI) is continuously fed to the screen operating computer (BP), in accordance with which same or the graphic processor (GP) continuously processes the map information (KI) in such a way that the direction of travel is oriented approximately from bottom to top in the map image.

15. A method of map image representation according to claim 14 **characterised in that** during a respective turning manoeuvre the map image is kept unchanged on the screen and **in that** situation only the displayed vehicle position and optionally a vehicle direction display are continuously entered in corrected form.

16. A method of map image representation according to claim 14 **characterised in that** the map image information is respectively so selected with respect to the vehicle position that it is in the lower half of the screen, in particular near the lower edge thereof.

17. A method of map image representation according to one of the preceding claims **characterised in that** when, overriding an actual operating condition, another operating condition is preset for the screen operating computer (BP) by an operating instruction, in particular by way of a keyboard (T), control of processing and representation of the map image information is effected in accordance therewith.

18. A method of map image representation according to claim 17 **characterised in that** a respective overview map image and a map image section selected in accordance with the vehicle speed (FV) are held in processed and stored form and one of the two map images is represented on the screen (BS) in dependence on an operating instruction, in particular by way of a keyboard (T).

19. A method of map image representation according to one of the preceding claims **characterised in that** a digitised aerial image serves as one of the items of map information (KI).

20. A method of map image representation according to one of the preceding claims **characterised in that** one of the items of map information (KI) is a digitally stored 3D map representation from which conversion into an image of the terrain which is close to reality from the view of a driver or from a respectively predetermined position is effected from the respective location of the vehicle in dependence on the terrain gradient mapped there and/or gradients measured at the vehicle and is displayed.

21. A method of map image representation according to one of the preceding claims **characterised in that** the respective map or terrain image is transferred by the screen operating computer (BP) to another station (SZ, SM, SA).

## Revendications

1. Procédé pour déterminer la distance entre une machine agricole et le sol, la machine agricole étant constituée.d'une machine de travail automotrice et d'un engin frontal, et au moins un senseur déterminant sans contact la distance entre l'engin frontal et la surface du champ, **caractérisé en ce qu'**à la machine agricole (20) est associé au moins un senseur (24 ; 34 ; 50) qui, à l'aide d'au moins une onde électromagnétique traversant la végétation (35 ; 36 ; 60) du champ, détermine sans contact au moins la distance au sol (23).

2. Procédé selon la revendication 1, **caractérisé en ce que** le senseur, au nombre d'au moins un, est un senseur radar (24 ; 33 ; 50).

3. Procédé selon au moins une des revendications précédentes 1 ou 2, **caractérisé en ce que** le senseur radar (24 ; 33 ; 50), au nombre d'au moins un, fonctionne à une fréquence de 24 GHz.

4. Procédé selon au moins une des revendications précédentes 1 à 3, **caractérisé en ce que** le signal de senseur du senseur radar (24 ; 33 ; 50), au nombre d'au moins un, fait l'objet d'une modulation sinusoïdale de fréquence (MSF).

5. Procédé selon au moins une des revendications précédentes 1 à 4, **caractérisé en ce que** le signal de senseur du senseur radar (24 ; 33 ; 50), au nombre d'au moins un, fait l'objet d'une modulation linéaire de fréquence (MLF).

6. Procédé pour déterminer la distance entre une machine agricole et le sol, la machine agricole étant constituée d'une machine de travail automotrice et d'un engin frontal, et au moins un senseur déterminant sans contact la distance entre l'engin frontal et la surface du champ, **caractérisé en ce qu'**à la machine agricole (20) est associé au moins un senseur (46 ; 48) qui, à l'aide d'au moins une onde électromagnétique focalisée orientée au moins approximativement perpendiculairement au sol (23), détermine sans contact la distance au sol (23) en longeant la végétation (35 ; 36 ; 60) du champ.

7. Procédé selon la revendication 6, **caractérisé en ce que** le senseur, au nombre d'au moins un, est un senseur laser (46 ; 48).

8. Procédé selon au moins une des revendications précédentes 1 à 7, **caractérisé en ce que** le senseur (24 ; 33 ; 46 ; 50), au nombre d'au moins un, détermine la distance au sol (23) en plusieurs endroits (39 ; 40 ; 52 ; 55 ; 62) à l'aide d'un signal de palpage oscillant (25 ; 47).

9. Procédé selon au moins une des revendications précédentes 1 à 8, **caractérisé en ce que** la distance au sol (23) est déterminée en plusieurs endroits (39 ; 40 ; 52 ; 55 ; 62) transversalement à la direction de déplacement (15) de la machine agricole (20).

10. Procédé selon au moins une des revendications précédentes 1 à 9, **caractérisé en ce qu'**au moins deux valeurs de distance déterminées d'un senseur (24 ; 33 ; 46 ; 50) sont enregistrées dans une mémoire, et la valeur de distance maximale est définie en tant que valeur de distance au sol (23).

11. Procédé selon au moins une des revendications précédentes 1 à 10, **caractérisé en ce que** le senseur (24 ; 33 ; 46 ; 50), au nombre d'au moins un, détermine la distance au sol (23) en précurseur dans la direction de déplacement (15) de la machine agricole (20)..

12. Procédé selon au moins une des revendications précédentes 1 à 11, **caractérisé en ce que** la distance au sol déterminée (23), au nombre d'au moins une, est utilisée pour la commande automatique de la distance (26 ; 27) de l'engin frontal (21) au sol (23).

13. Procédé selon au moins une des revendications précédentes 1 à 12, **caractérisé en ce qu'**au moins deux distances au sol déterminées (23), distantes l'une de l'autre transversalement à la direction de déplacement (15) de la machine agricole (20), sont utilisées pour la commande de l'inclinaison transversale de l'engin frontal (21).

14. Procédé selon au moins une des revendications précédentes 1 à 13, **caractérisé en ce que** le senseur (24 ; 33 ; 46 ; 50), au nombre d'au moins un, détermine la distance au sol (23) et au moins une distance supplémentaire à la végétation (35 ; 36 ; 60) du champ.

15. Procédé selon au moins une des revendications précédentes 1 à 14, **caractérisé en ce qu'**au moins deux valeurs de distance déterminées transversalement à la direction de déplacement (15) de la machine agricole (20) sont utilisées pour le guidage de la machine agricole (20).

16. Procédé selon au moins une des revendications précédentes 1 à 15, **caractérisé en ce que** le senseur (24 ; 33 ; 46 ; 50), au nombre d'au moins un, détermine au moins un paramètre supplémentaire de la végétation (35 ; 36 ; 60) du champ.

17. Procédé selon la revendication 16, **caractérisé en ce que** le paramètre déterminé à titre supplémentaire est la densité et/ou l'humidité de la végétation (35 ; 36 ; 60) du champ.

18. Procédé selon au moins une des revendications précédentes 1 à 17, **caractérisé en ce que** le paramètre, au nombre d'au moins un, déterminé par au moins un senseur (24 ; 33 ; 46 ; 50) est utilisé pour le réglage et/ou la commande automatiques de la machine agricole (20).

19. Dispositif de mesure pour la mise en oeuvre du procédé selon au moins une des revendications 1 à 18, **caractérisé en ce que** le senseur (24, 33, 46, 50), au nombre d'au moins un, est implanté sur l'engin frontal (21).

20. Dispositif de mesure pour la mise en oeuvre du procédé selon au moins une des revendications 1 à 19, **caractérisé en ce que** le senseur (24, 33, 46, 50), au nombre d'au moins un, est implanté dans un diviseur (30, 31).

21. Dispositif de mesure pour la mise en oeuvre du procédé selon au moins une des revendications 1 à 20, **caractérisé en ce que** le senseur (24, 33, 46, 50), au nombre d'au moins un, est implanté en précurseur au-dessus de la végétation non récoltée (35) du champ dans la direction de déplacement (15) de la machine agricole (20).
